# EUROPEAN PATENT APPLICATION

(11) **EP 4 407 785 A1**
(43) Date of publication of application: **31.07.2024**
(21) Application number: 24153669.7
(22) Date of filing: 24.01.2024
(51) Int. Cl.: H01P 1/06, H01P 1/165, H04B 5/72, H01Q 11/08

(54) **WIRELESS COMMUNICATION ROTARY JOINT**

(30) Priority: 25.01.2023 US 202363441100 P
(71) Applicant: Deublin Company, LLC, Waukegan IL 60085 (US)
(72) Inventor: Loacker, Erich, Waukegan, Illinois, 60085 (US); Jakymiw, Matt, Waukegan, Illinois, 60085 (US); Han, Lu, Waukegan, Illinois, 60085 (US)
(74) Representative: Patentanwälte Pinter & Weiss OG

(57) **Abstract**

A system and method for communicating signals through a slip ring. It includes a stator and a rotor configured to rotate relative to the stator about a rotation axis, the rotor having a first wireless module with a first antenna. The stator has a second wireless module with a second antenna. The first and second antennae are arranged along the rotation axis. The first and second antennae are adapted to communicate with each other by at least partially using polarized signals.

## Description

### FIELD

The present teachings relate generally to rotational electromechanical systems and, more particularly, to rotary joints (slip rings, etc.) having wireless communication capabilities.

### BACKGROUND

It would be beneficial to have an alternative system and method for a wireless communication rotary joint.

A rotary join (also referred to as a slip ring), is an electromechanical device that allows the transmission of power and/or electronic signals from a stationary element to a rotating element. A slip ring can be used in any electromechanical system that requires rotation while transmitting power or signals. It can improve mechanical performance, simplify system operation, and eliminate damage-prone wires dangling from movable joints.

Also called rotary electrical interfaces, rotating electrical connectors, collectors, swivels, or electrical rotary joints, slip rings/rotary joints are commonly found in slip ring motors, electrical generators for alternating current (AC) systems, cable reels, and wind turbines. They can be used on any rotating object to transfer power, control circuits, or analog or digital signals, including data such as those found on aerodrome beacons, rotating tanks, power shovels, radio telescopes, telemetry systems, heliostats, and Ferris wheels, to name a few.

In a variety of technological contexts, machines need to collect information for proper decision-making based on corresponding control logic. For example, sensors such as temperature, speed, pressure, and other signal detectors can send information to a control unit of the machine, and the control unit can respond to the signals it receives by making adjustments, for example by regulating speed, adjusting pressure or pitch, etc. Video information is also an example of data that may be collected and sent for decision making processes based on character recognition, process changes, product condition, and other video analysis.

Complications are introduced when the transmission of such signals must be made between static and dynamic elements, particularly where rotational motion is associated with the dynamic components. Conventional systems generally use sliding contacts in slip rings to transmit signal information and power across rotary joints involving a static or stationary component and a rotational dynamic component. Conventional slip rings may have short lifetimes, be susceptible to interference, and can be complex, expensive, and/or difficult to maintain.

Conventional slip rings may be classified into two types: contact and non-contact slip rings. Contact-type slip rings include traditional monofilament wire brush slip rings and traditional composite graphite-based brush slip rings. Both of these have a number of disadvantages, including limited frequency range, short brush life due to frictional and arc wear, difficult assembly, and brush dust generation that requires periodic cleaning. Less common contacting methods include mercury, flexible rings, and conductive grease, which have problems similar to conventional contact slip rings in the transfer of high-speed data.

Non-contact-type slip rings include optical, capacitive, radio, and inductive joints or bridges. While non-contact-type slip rings avoid some of the disadvantages associated with using brushes, such as wear, they have several disadvantages of their own.

Optical non-contact-type slip rings can be complex to install and repair due to the stringent requirements associated with optical cables, may have expensive light sources and electronic drivers for transmitting and receiving fiber signals, and may require application-specific cables (e.g., to match the wavelength being used to the cable being used). Multiple channel optical rotary joints can have high losses, which limit usage to applications that can accept lower light levels. The specialized installation methods, troubleshooting methods, and personnel, along with higher cost can make optical rotary joints viable only for particular applications.

Slip rings using capacitive and inductive coupling have relatively narrow frequency bands, require complex data formatting circuitry, stringent control of capacitive gap variation, and raise concerns regarding data loss. Circuit design on each side of the coupling capacitor for the capacitively-coupled model can be complicated due to resistor/capacitor (RC) time constants and resonant frequencies set up between the signal paths and the coupling capacitor, and thus it may be impractical to implement rotary joints using capacitive and inductive couplings for many applications.

Coaxial, radio frequency (RF) rotary joints (in many cases special examples of capacitively-coupled rotary joints) may have stringent requirements for dimensional characteristics in order to maintain signal integrity, may have high material cost, high assembly costs, and difficult assembly processes due to tight tolerances. Coaxial and RF rotary joints may only be viable for particular applications due to these high costs and specialized assembly. Using infrared (IR) technology for transmission across rotary joints suffers from similar problems, with line-of-sight issues or other interference issues that require specialized configurations to address.

One example of a previously proposed wireless rotary joint using RF signals can be seen in US Pub. No. 2014/0099890 to Lichter et al., entitled Wireless Platform For Rotary Joint. This reference discusses a rotary joint having a first wireless communication device associated with the stator, including an emitter antenna for providing data signals to a receiver antenna associated with a rotor having a second wireless communication device. The device described in this reference, while effective in transmitting wireless signals, may require specific placement of the antennas and introduce radial asymmetries within the joint, which may limit the speed and reliability of device operation and signal transmission for certain applications.

Another example is Canadian patent no. CA3011715 to Roseband et al. (Roseband), entitled Devices And Methods For A Rotary Joint With Multiple Wireless Links. It discusses a signal conditioner coupled to a plurality of probes. It selects one of the probes based on orientation and then uses the selected probe for wireless communication, at least temporarily, until another probe comes into view. While it may be at least partially effective in achieving wireless communication between rotating and stationary platforms, the signals may not be continuous and require constant switching of probes that increases complexity of the system.

### SUMMARY

The needs set forth herein as well as further and other needs and advantages are addressed by the present embodiments, which illustrate solutions and advantages described below.

One embodiment of a system according to the present teachings includes, but is not limited to, a slip ring. It has a stator and a rotor configured to rotate relative to the stator about a rotation axis, the rotor having a first wireless module with a first antenna. The stator has a second wireless module with a second antenna. The first and second antennae are arranged along the rotation axis. The first and second antennae are adapted to communicate with each other by at least partially using polarized signals.

In one embodiment, the first antenna is mounted on an end of the rotor that is disposed in the stator during operation. The second antenna is mounted on the stator such that the first and second antennae face each other during rotation of the rotor.

In one embodiment, the first and second antenna have generally helical-shaped elements to polarize their respective signals.

In one embodiment, the first and second antennae are arranged for a circular polarization.

In one embodiment, the first and second antennae each include two antenna elements, one of which is used for transmission and the other for reception.

In one embodiment, the first and second antennae transmit and receive signals bi-directionally by polarization, frequency modulation, and/or amplitude modulation.

In one embodiment, the first and second wireless modules each include a 60 GHz chipset that performs at least some signal conditioning.

In one embodiment, the first and second antennae are configured to communicate with each other according to Wi-Fi, ZigBee, Bluetooth, wireless HDMI, USB, or IEEE 802.11 standard.

In one embodiment, a light module is disposed in each of the rotor and stator, and optical fibers extend to each of the first and second antennae such that communication is facilitated between the rotor and the stator using light signals.

In one embodiment, the first and second antenna extend parallel to one another and the rotation axis.

In one embodiment, the first and second antenna extend at an angle relative to one another and are angularly disposed relative to the rotation axis.

In one embodiment, a shield at least partially contains signals exchanged by the first and second antennae within the slip ring.

In one embodiment, the first and second antennae communicate with each other using one or more Ethernet channels.

In one embodiment, the one or more Ethernet channels are time divided to create multiple data channels.

One embodiment of a system according to the present teachings includes, but is not limited to, a communication system for a slip ring. It has a first wireless module with a first antenna, the first wireless module adapted to be mounted on a rotor that rotates relative to a stator about a rotation axis, and a second wireless module with a second antenna, the second wireless module adapted to be mounted on the stator. The first and second antennae are adapted to communicate with each other by at least partially using polarized signals.

In one embodiment, a rotary joint includes such a communication system. A rotor has the first wireless module and a stator has the second wireless module. The first and second antennae are arranged along the rotation axis and facing each other.

In one embodiment, the first antenna is mounted on an end of the rotor that is disposed in the stator during operation and the first and second antenna have generally helical-shaped elements that polarize their respective signals.

In one embodiment, the first and second wireless modules each include a 60 GHz chipset that performs at least some signal conditioning, and the first and second antennae are configured to communicate with each other according to Wi-Fi, ZigBee, Bluetooth, wireless HDMI, USB, or IEEE 802.11 standard.

One embodiment of a method according to the present teachings includes, but is not limited to, a method for communicating signals through a slip ring. It includes providing a stator, and providing a rotor configured to rotate relative to the stator about a rotation axis, the rotor having a first wireless module with a first antenna. The stator has a second wireless module with a second antenna. The first and second are antennae arranged along the rotation axis. It includes transmitting and receiving a polarized radio frequency (RF) signal through the first and second antennae.

In one embodiment, the first antenna is mounted on an end of the rotor that is disposed in the stator during operation, the second antenna is mounted on the stator such that the first and second antennae face each other during rotation of the rotor, and the first and second antenna have generally helical-shaped elements to polarize their respective signals.

Other embodiments of the system and method are described in detail below and are also part of the present teachings.

The present teachings include a non-contacting slip ring that uses RF antenna technology to provide sufficient bandwidth to allow the use of high-speed wireless networking protocols to transmit large amounts of data across a rotating interface both reliably and cost effectively.

In one embodiment, a slip ring includes a stator, a rotor that is rotatably associated with the stator about a rotation axis, a first wireless converter module that includes a first antenna, the first wireless converter module and the first antenna being associated with the rotor, and a second wireless converter module that includes a second antenna, the second wireless converter module and the second antenna being associated with the stator. Each of the first and second antennae includes first and second antenna elements, each of the first and second antenna elements being configured to transmit or receive a respective polarized radio frequency (RF) signal. The first and second antennae are disposed in close spaced relation and aligned about a rotation axis of the rotor, such that a first polarized RF signal is exchanged between the respective first elements, and a second polarized RF signal is exchanged between the respective second elements. The first polarized RF signal is emitted from the first antenna and received by the second antenna, and the second polarized RF signal is emitted from the second antenna and received by the first antenna.

In another embodiment, a method for communicating signals through a slip ring includes providing a stator, providing a rotor that is rotatably associated with the stator about a rotation axis, providing a first wireless converter module that includes a first antenna, the first wireless converter module and the first antenna being associated with the rotor, and providing a second wireless converter module that includes a second antenna, the second wireless converter module and the second antenna being associated with the stator. Each of the first and second antennae includes first and second antenna elements. The method further includes transmitting or receiving through each of the first and second antenna elements a respective polarized radio frequency (RF) signal.

For a better understanding of the present embodiments, together with other and further aspects thereof, reference is made to the accompanying drawings and detailed description, and its scope will be pointed out in the appended claims.

### BRIEF DESCRIPTION OF THE DRAWINGS

**FIGs. 1 and 2** are block diagrams depicting connections and components of two embodiments of wireless platforms for use in a rotary joint in accordance with the present teachings.
**FIG. 3** is a block diagram of a rotary joint in accordance with the present teachings.
**FIG. 4** is a sectional view of an embodiment of a rotary joint in accordance with the present teachings.
**FIG. 5** is a sectional view of another embodiment of a rotary joint in accordance with the present teachings.
**FIG. 6** is a plan view and **FIG. 7** is a section view of a polarized antenna assembly in accordance with the present teachings.
**FIG. 8** is a section view through a partial, enlarged view of a portion of the rotary joint shown in **FIG. 4****.**
**FIG. 9** is a section view through a partial, enlarged view of a portion of another embodiment for the rotary joint shown in **FIG. 4****.**

### DETAILED DESCRIPTION

The present teachings are described more fully hereinafter with reference to the accompanying drawings, in which the present embodiments are shown. The following description is presented for illustrative purposes only and the present teachings should not be limited to these embodiments. Any computer configuration and architecture satisfying the speed and interface requirements herein described may be suitable for implementing the system and method of the present embodiments.

In compliance with the statute, the present teachings have been described in language more or less specific as to structural and methodical features. It is to be understood, however, that the present teachings are not limited to the specific features shown and described, since the systems and methods herein disclosed comprise preferred forms of putting the present teachings into effect.

For purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail.

A "computing system" may provide functionality for the present teachings. The computing system may include software executing on computer readable media that may be logically (but not necessarily physically) identified for particular functionality (e.g., functional modules). The computing system may include any number of computers/processors, which may communicate with each other over a network. The computing system may be in electronic communication with a datastore (e.g., database) that stores control and data information. Forms of computer readable media include, but are not limited to, disks, hard drives, random access memory, programmable read only memory, or any other medium from which a computer can read.

Generally, all terms used in the claims are to be interpreted according to their ordinary meaning in the technical field, unless explicitly defined otherwise herein. All references to a/an/the element, apparatus, component, means, step, etc. are to be interpreted openly as referring to at least one instance of the element, apparatus, component, step, etc., unless explicitly stated otherwise. The steps of any method disclosed herein do not have to be performed in the exact order disclosed, unless explicitly stated. The use of "first", "second," etc. for different features/components of the present disclosure are only intended to distinguish the features/components from other similar features/components and not to impart any order or hierarchy to the features/components.

Recitations of numerical ranges by endpoints include all numbers within that range (e.g., 1 to 5 includes 1, 1.5, 2, 2.75, 3, 3.80, 4, 5, etc.). Where a range of values is "greater than", "less than", etc., of a particular value, that value is included within the range.

Any direction referred to herein, such as "top," "bottom," "left," "right," "upper," "lower," "above," below," and other directions and orientations are described herein for clarity in reference to the figures and are not to be limiting of an actual device or system or use of the device or system. Many of the devices, articles, or systems described herein may be used in a number of directions and orientations.

Any citation to a reference in this disclosure or during the prosecution thereof is made out of an abundance of caution. No citation (whether in an Information Disclosure Statement or otherwise) should be construed as an admission that the cited reference qualifies as prior art or comes from an area that is analogous or directly applicable to the present teachings.

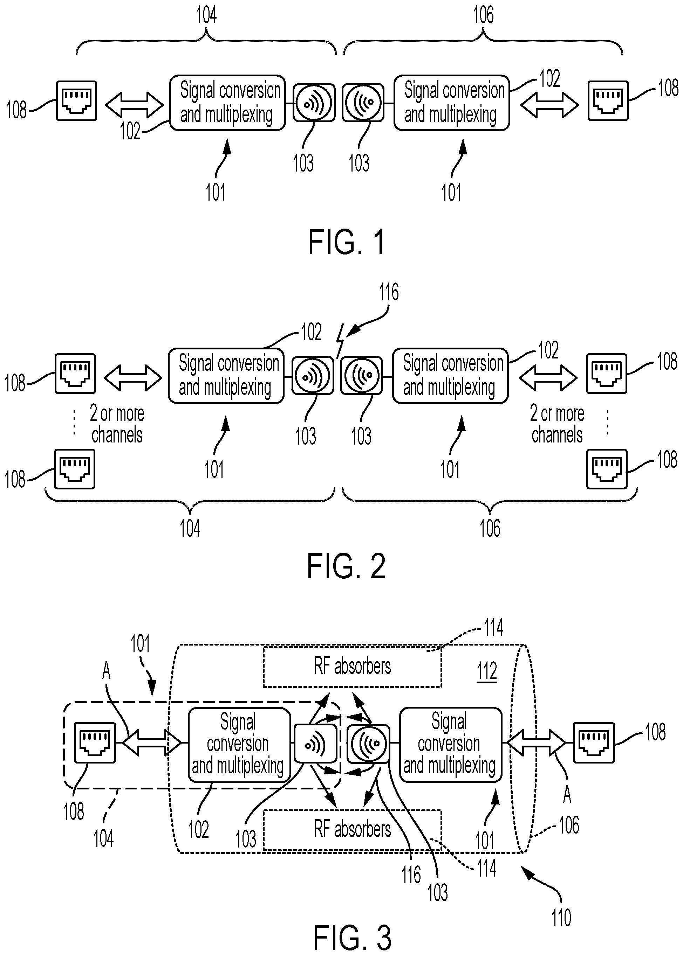

Referring now to **FIGs. 1 and 2****,** shown are block diagrams depicting connections and components of two embodiments of wireless platforms for use in a rotary joint in accordance with the present teachings. In **FIG. 1****,** a single communication channel (e.g., Ethernet channel) is utilized, while in **FIG. 2** multiple channels are utilized. Each of the static and dynamic sections of the rotary joint includes a wireless converter module **101,** which includes a signal converter module **102,** among other components, and an antenna **103.** The signal converter module **102** acts as a signal conditioner and converter as well as a networking interface, although not limited thereto. It may include various functionality such as multiplexing, filtering, converting, calculating, and others, as is appreciated by one skilled in the art.

Pairs of wireless converter modules **101** are used in a rotary joint to effect communication between a stationary machine component or stator **106,** and a rotating machine component or rotor **104.** In the embodiment shown, each communication channel is denoted by a connector **108,** which is communicatively and physically associated with the respective wireless converter module **101.** For example, the connector **108** may include an Ethernet connector or any other form of connector that permits the desired communication, as is appreciated by one skilled in the art.

Referring now to **FIG. 3****,** shown is a block diagram of a rotary joint in accordance with the present teachings. As shown, one or more connectors **108** can be disposed in connection with a wireless converter module **101** on a rotor **104** (denoted by dashed lines) and corresponding one or more connectors **108** can be disposed in connection with a second wireless converter module **101** on a stator **106** of a rotary joint **110.**

In the embodiment shown in **FIG. 3****,** the rotary joint **110** includes a stator **106** having a generally hollow cylindrical shape that creates an internal cavity **112,** in which at least a portion of the rotor **104** is disposed. While a cylindrical cavity **112** is shown in this embodiment, it is appreciated that stators of any shape having cavities of any shape can also be used. The antenna **103** of the stator **104** and the antenna **103** of the stator **106** are in facing relation and both are coaxially arranged along a rotation axis, **A,** of the rotor **104,** and in facing relation within the cavity **112.**

Optional absorbers or shields **114** (e.g., radio frequency, etc.) are disposed adjacent the antennae **103** in the cavity to reduce signal leakage. The shields **114** can prevent transmission of signals emitted by one of the antennae **103** in a one-way communication scheme, or signals emitted from both antennae **103** in a two-way communication scheme. The shields **114** can also reflect signals back to the antennae **103** to improve signal transmissivity, although not limited thereto.

During operation, one or more data signals are provided to a connector **108.** The signal is then conditioned (e.g., in a known fashion) and provided to a signal conversion and multiplexer module, which in this case is the signal converter module **102,** and then transmitted by the antenna **103** in any appropriate format.

In the illustrated embodiment, the signal transmitted by the antenna **103** is processed through a 60 GHz chipset, although not limited thereto, and is also time divided through the signal converter module **102** (e.g., wireless converter module **101**) for multiple data channels, which can be accomplished up to an aggregate data speed of 6.25 Gbps or higher. The wireless transmission path is carried at a frequency that can be well above normal EMI/EMC interference bandwidths, which enables its use in high interference environments. Moreover, shields and other types of external structures can be used to prevent transmission of the wireless signals externally for reasons of avoiding interference with adjacent machines, ensuring signal integrity from a security standpoint, and the like. In addition, or alternatively, signal encryption may be used for wirelessly sent signals to maintain signal security and integrity.

In general, the wireless communications module **101** comprises wireless communications hardware (e.g., a printed circuit board) used for generating short-range wireless communication signals according to a protocol such as Wi-Fi, ZigBee, Bluetooth, wireless HDMI and/or the IEEE 802.11 standard, although not limited thereto. Such short-range wireless communication signals are transmitted and received through the antennae **103,** via a wireless connection **116,** to and from each of the stationary and rotating portions of the rotary joint **110.**

The module **101** may comprise other functionality, including sensor information, data storage (memory), and processing capabilities. In this way, it may operate as a computing system for local processing of information beyond signal conversion and manipulation.

Signal connections from the system connected to the rotary joint may feed directly into the wireless communications module **101,** such as Ethernet, EtherCAT, Profinet, and Profibus connections, although not limited thereto. Other signal connections, such as Can Bus, RS-232, RS-422, RS-485, video, optical, and analog signal connections can feed into the signal converter module **102,** which conforms the signals to a format compatible with the wireless converter module **101** (e.g., an Ethernet format) and transmits the converted signals to the wireless converter module **101.** It is appreciated that signal communications may not only be transmitted via the antenna, but also received through the antenna and processed by the wireless platform-i.e., Ethernet signals received via antenna **103** and wireless converter module **101** may be converted to appropriate non-Ethernet formats by the signal converter module **102** and sent to the system along the Can Bus, RS-232, RS-422, RS-485, video, optical, and/or analog signal connections, or not converted and sent to the system along the Ethernet, EtherCAT, Profinet, and/or Profibus connections, although not limited thereto.

It is appreciated that the above-described types of signal connections-i.e., Ethernet, EtherCAT, Profinet, Profibus, Can Bus, RS-232, RS-422, RS-485, video, optical, and analog-are merely examples of common types of signal connections, and that one skilled in the art appreciates that other types of signal connections may be used as well (with or without the signal converter module **102**). Moreover, one skilled in the art would be able to implement variations of the exemplary configurations shown without departing from the principles of the present teachings. For example, the signal converter module **102** could be divided into separate signal converter modules for each type of signal, or the signal converter module and associated connection lines could be integrated with the Ethernet, EtherCAT, Profinet, and/or Profibus connection lines via a multiplexer circuit to multiplex all signals transmitted to and received from the wireless converter module **101.** In another exemplary embodiment, multiple wireless converter modules could be used, or separate circuit boards could be stacked together to form the wireless converter module to accommodate varying bandwidth requirements. Because of the symmetry of the circuitry, either portion could be stationary, and the other portion could be rotatable.

In various examples, the wireless converter module **101** comprises a WiFi transceiver, a wireless Ethernet bridge or a custom-designed wireless module, and the signal converter module **102** is a digital parallel-to-serial converter, RS422-to-Ethernet converter, or a more custom approach to the conversion.

The exemplary wireless platforms shown (e.g., in **FIGs. 1-3** and 9) further depict a respective antenna **103** that is part of each wireless converter module **101** for facilitating communications between each pair of modules **101.**

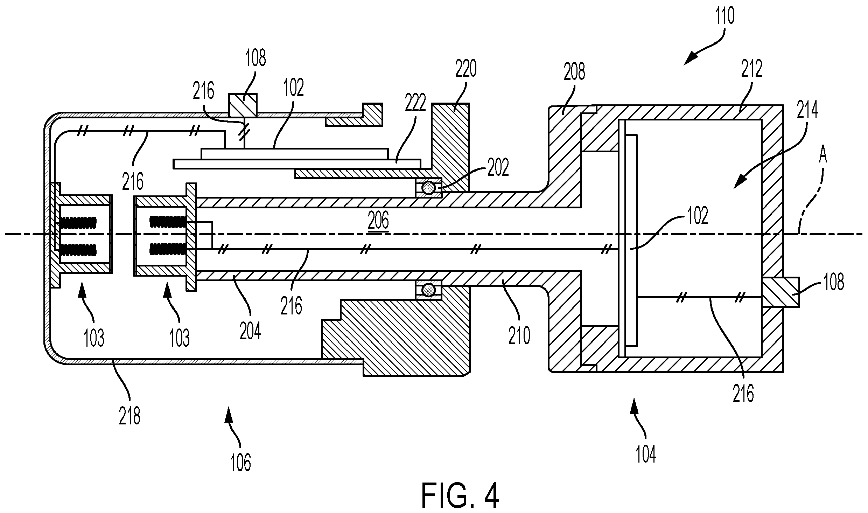

Referring now to **FIG. 4****,** shown is a sectional view of an embodiment of a rotary joint in accordance with the present teachings. This uses RF communication for a rotary joint **110.** For simplicity, reference will be made in the description below to features and elements that are the same or similar to elements previously described using the same reference numerals as previously used. The rotary joint includes a rotor **104** and a stator **106** that are rotatably connected to one another using a rotation enabling device, for example, one or more bearings **202** (only a single one shown here, although any number could be used such as 2, 3, 4, 5, 10, 15, 20, etc.).

The rotor **104** in the embodiment shown is a rotating assembly that includes a rotating shaft **204** forming a hollow interior cavity **206** that extends along an axis of rotation, **A.** At an external end, the rotor shaft **204** connects to a hub **208** via a neck extension **210.** The hub includes a cover **212** having a hollow cup shape that defines a rotor housing **214.** The rotor housing **214** is disposed around the signal converter module **102,** which is connected via signal conductors **216** to the antenna **103** and to one or more connectors **108** (only one shown).

The stator **106** is a stationary assembly that includes a shell **218** having a generally hollow cylindrical shape that may be closed at one end, or open and closed with a cap. At an open end the shell **218** includes an axle mount **220** that supports the bearing **202** and, thus, the rotor shaft **204.** The axle mount **220** further includes a shelf **222** onto which a second signal converter module **102** is mounted.

The second signal converter module **102** is communicatively connected to a second antenna **103** via conductors **216.** The second antenna **103** is disposed in the interior of the shell **218** and in aligned relation with the antenna **103** of the rotor **104** along the rotation axis **A.** The shell **218** and/or the axle mount **220** includes one or more connectors **108** that are also communicatively connected to the second signal converter **102** via conductors **216.** Advantageously, both antennae **103** are polarized antennae as will be described hereinafter.

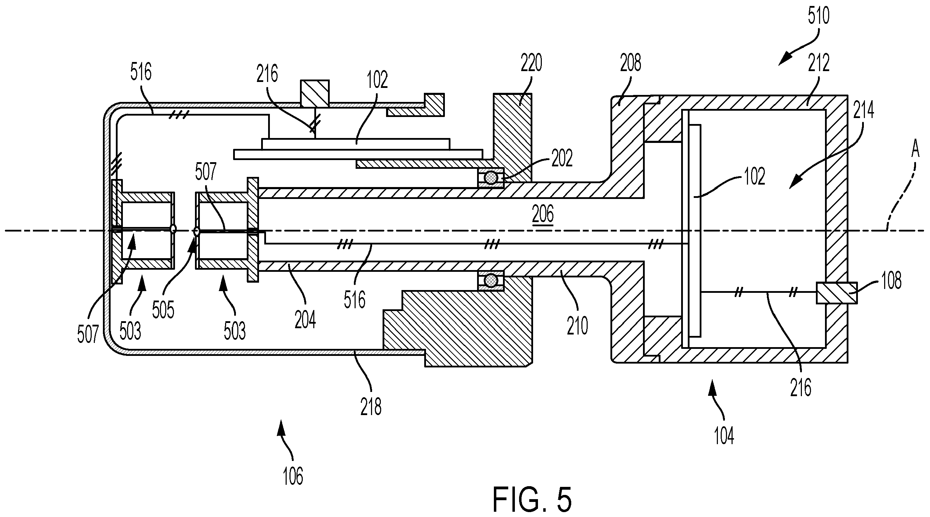

Referring now to **FIG. 5****,** shown is a sectional view of another embodiment of a rotary joint in accordance with the present teachings. A variation of the rotary joint, where a rotary joint **510** utilizes optical fibers and light energy to transmit information. While the wireless antennas are not shown in this embodiment for simplicity, it is appreciated that the transmission of information using light energy, for example lasers, can be used instead of or, preferably, in addition to the wireless communication provided by wireless antennas.

In this embodiment, a light module **503** is used apart from the antenna **103** (not shown), which it can either replace or work alongside with. The light module **503** uses a lens **505** that is connected to an optical fiber **507.** The optical fiber **507** is then connected to a light conduit **516** to provide information to and from its respective signal converter module **102** in the rotor **104** and the stator **106.** As can be appreciated, the signal converter module **102** in this embodiment is configured to convert light energy to data signals, and vice versa.

Returning to the embodiment of **FIG. 4****,** one exemplary embodiment for the antenna **103** is shown. The antennae in the present disclosure may be polarized antennas used in pairs, which enable the uninterrupted receipt of RF signals from the rotating antenna in the pair, which is associated with the rotor, to the stationary antenna in the pair, which is associated with the stator.

As used herein for some embodiments, polarization of the antenna **103** means the transmission and receipt of a signal provided by one antenna element along a polarization direction, and its receipt by another antenna element having the same polarization direction. One reason for polarization is to achieve reliable bi-directional signal transmission and receipt between the rotating and stationary portions of the slip ring assembly. Even though polarized antennas are shown, other bi-directional signal receipt and transmission structures and techniques can also be used. For example, angle of rotation-based frequency and/or amplitude modulation techniques can also be used. The polarization feature (as well as the other differentiation techniques) can also be used to transmit both signals in the same direction, thereby theoretically doubling the throughput capacity of the device.

Each antenna **103** may include two antenna elements, one of which is used for transmission and the other for receipt, although not limited thereto. It may be preferable to have a single pair of antennas used on either side of the wireless platform that can convey signals to/from each side in an uninterrupted fashion during rotation.

In past solutions, multiple probes have been used depending on the rotational position of the two sides of the wireless bridge. As discussed, for example, in Canadian patent no. CA3011715 to Roseband et al. (Roseband), a device is provided that includes a first platform having a first side, and a second platform having a second side positioned within a predetermined distance to the first side. A probe is mounted to the first platform, and a plurality of probes is mounted to the second platform. During operation, Roseband describes that a signal conditioner is coupled to the plurality of probes and selects one of the plurality of probes based on an orientation of the first platform relative to the second platform, and then uses the selected probe for wireless communication with the probe on the first platform, at least temporarily, until another probe comes into view of the single probe on the first platform. While Roseband's system may be at least partially effective in achieving wireless communication between the rotating and stationary platforms, the signals conveyed may not be continuous and may require constant switching of probes on the second platform. Further, it can be understood that probe switching may increase with rotational speed of one platform relative to the other. Such complexity may be advantageously avoided in the embodiments according to the present disclosure.

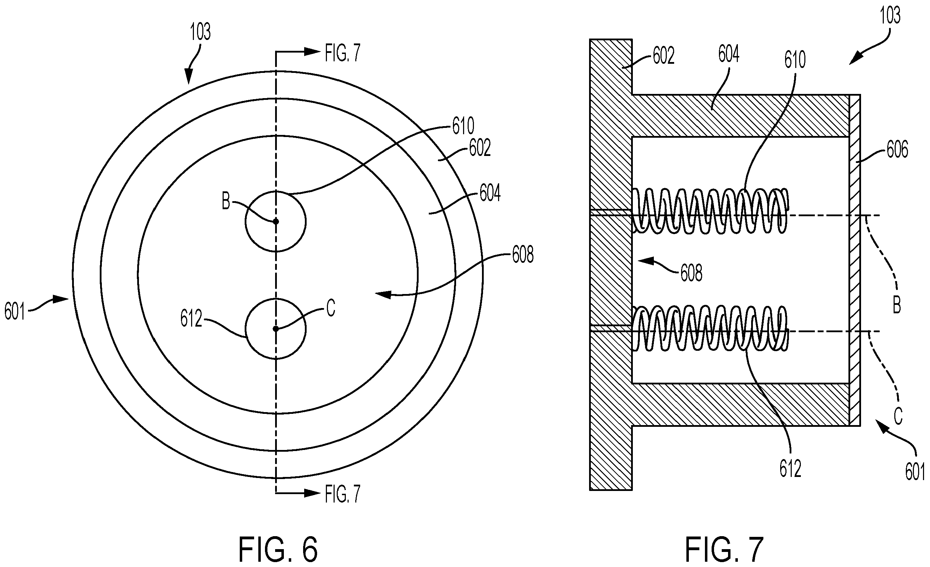

Referring now to **FIG. 6****,** shown is a plan view, and **FIG. 7** is a section view, of a polarized antenna assembly in accordance with the present teachings. The antenna **103** includes a housing **601** that includes a mounting flange **602,** a cylindrical wall **604,** and a cover **606** (not shown in **FIG. 6** to expose the internal components). The mounting flange **602** includes a mounting surface **608** formed within the wall **604.** Two antenna elements **610** and **612** are disposed onto the mounting surface **608** and extend along respective axes **B** and **C,** as is best shown in **Fig. 7****.**

Each of the elements **610** and **612** has a generally helical shape that polarizes a signal emitted by each or, in addition to or alternatively, creates a polarization structure that receives a polarized signal arriving at an element. In the illustrated embodiments, the antenna elements **610** and **612** are structurally arranged for a circular polarization based on the structure of their helical coil, which as is known depends on a number of different factors including pitch and spacing of the helical elements, diameter of the helical shape, curling direction, number of turns, total length of the antenna, and the like.

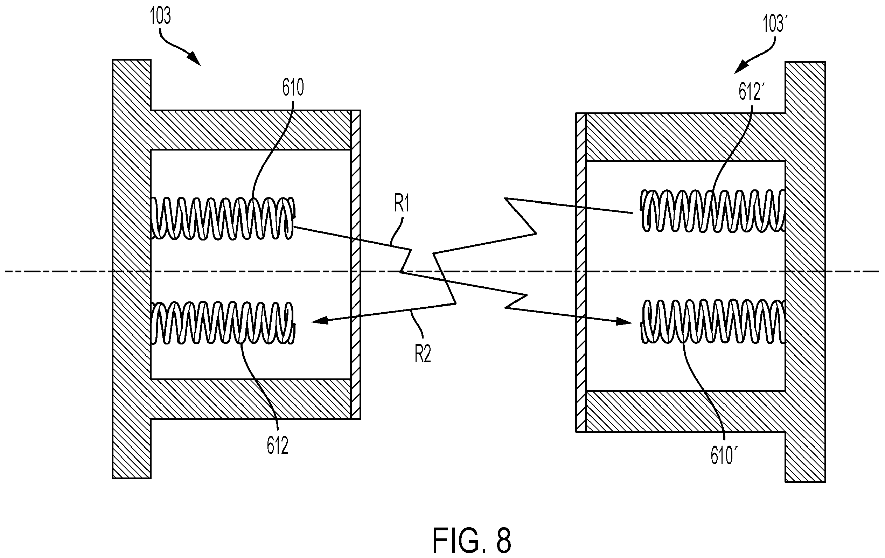

Referring now to **FIG. 8****,** shown is a section view through a partial, enlarged view of a portion of the rotary joint shown in **FIG. 4****.** The two elements **610** and **612** in a pair of antennae **103** have corresponding elements **610'** and **612'** in the matching pair antenna **103',** when the pair of antennae **103** is installed in a rotary joint **110** (shown in **Fig. 4**).

Because the same polarization is used, a first signal **R1** (e.g., radio frequency (RF)) having a first polarization can be emitted by element **610** and be received in element **610'.** Similarly, a second signal **R2** having a second polarization can be emitted by element **612'** and be received in element **612.** Together, the antennae **103** form a transceiver pair in which information can be transmitted and received in both directions. It should also be noted that the first and second signals **R1** and **R2** can also be transmitted unidirectionally, which would double the data throughput in one direction at a time.

Because of the relatively short distance separating the antennae **103** and **103',** the polarized signals are transmitted and received to and from each pair of elements **610/610'** or **612/612',** which are axial-mode helical antennas. The signals **R1** and **R2** have a wide bandwidth, are easily constructed, have a real input impedance, and can produce circularly polarized fields, all of which contribute to the reliable receipt of the signals **R1** and **R2** when the elements are aligned in facing relation (disposed at 180 degrees opposed relation) as shown in **FIG. 8****,** during rotation of the stator antenna **103** relative to the paired antenna **103** of the stator.

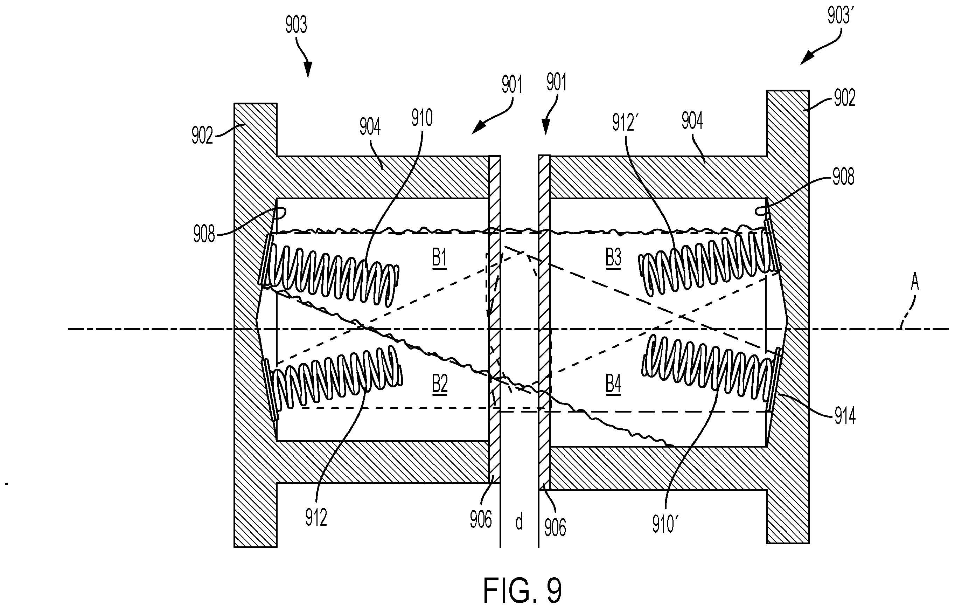

Referring now to **FIG. 9****,** shown is a section view through a partial, enlarged view of a portion of another embodiment for the rotary joint shown in **FIG. 4****.** A variation of the embodiment shown in **Fig. 8** is presented. In this embodiment, a pair of antennae **903/903'** is shown, each antenna includes a housing **901** that includes a mounting flange **902,** a cylindrical wall **904,** and a cover **906.** The mounting flange **902** includes a mounting surface **908** formed within the wall **904.**

Unlike the embodiment shown in **FIG. 7****,** in the embodiment of **FIG. 9** the mounting surface **908** has an inclined mounting surface disposed at an angle relative to the rotation axis **A** such that the antenna elements **910** and **912** extend at an angle relative to one another and are angularly disposed relative to the rotation axis **A.** The same structural configuration is present for antenna elements **910'** and **912'.** Each antenna element in the embodiment shown is connected to electrical circuitry **914** (e.g., a printed circuit board (PCB)). In this configuration, when the antenna elements **910** and **912** are mounted, their respective axes are inclined towards one another in a direction away from the mounting surface **908,** instead of being generally parallel as in the previously described embodiments.

Similar to the previously described embodiments, each of the elements **910** and **912** has a generally helical shape that polarizes a signal emitted by each or, in addition to or alternatively, creates a polarization structure that receives a polarized signal arriving at an element. In the illustrated embodiments, the antenna elements **910** and **912** are structurally arranged for a circular polarization based on the structure of their helical coil, which depends on a number of different factors including pitch and spacing of the helical elements, diameter of the helical shape, curling direction, number of turns, total length of the antenna, and the like. The two elements **910** and **912** in a pair of antennae **903** have corresponding elements **910'** and **912'** in the matching pair antenna **903',** as shown in **FIG. 9****,** when the pair of antennae **903** is installed in a slip ring.

When the elements **910** and **912** are inclined towards one another, a signal beam emitted by each element **910** and **912** is also inclined and as shown in **FIG. 9****,** the beam can be selected to have a conical included angle that covers both opposite side antennae for each antenna. More specifically, a beam **B1** emitted by element **910,** which is shown in the figure using wavy rays, has a spread angle that covers both antennae elements **910'** and **912'** regardless of the angular position of the antenna **903** relative to antenna **903'** relative to the axis of rotation **A.** Similarly, beam **B2** belonging to element **912,** beam **B3** belonging to element **912',** and beam **B4** belonging to element **910',** sweep areas that permit a direct line of influence between any two transmitting and receiving antenna elements at all times. That the beams overlap is not detrimental to signal receipt or transmission and does not cause signal interference due to the polarization of the signals.

The antennae **903** and **903'** are disposed at a distance **d** from one another. This distance, **d,** which represents a distance between the two housings, is indicative of, and also defines the distance between, the elements **910** and **912** relative to elements **910'** and **912'.** It may be desired to try to minimize the distance **d** as much as possible and, consequently, bring the antenna elements **910** and **912** as close as possible to corresponding antenna elements **910'** and **912'.** Bringing the elements as close as possible, or in close spaced relation, may be desirable because it helps reduce the overall size of the slip ring assembly or rotary joint **110** and may improve the signal transmission of the signals exchanged between the antenna elements. The signals (e.g., RF, etc.) are transmitted and received at a high frequency, so a close spaced relation between the antenna elements may help improve communication.

In a general aspect, the present disclosure describes a contactless slip ring that may utilize standard chipsets that use a high frequency signal as a carrier to transfer data between the rotor and the stator. High frequency chipsets provide sufficient bandwidth to transfer a single high speed data channel or multiple channels multiplexed into a single data line. This data transfer may be accomplished using near field coupled antennas that can be rotated relative to each other, which are embodied in one exemplary implementation as antenna elements **910, 912, 910'** and **912'.** For transmitting and receiving signals bi-directionally, the signals can be provided directionally by polarization, frequency modulation, or amplitude modulation, among other techniques.

One preferable aspect of the present teachings is using a low-cost, commercial chipset in conjunction with a specialized near field coupled antenna to transmit bi-directional high-speed data on a high frequency carrier. The specialized antenna design is driven in part by the high frequency signal and its transmission distance limits.

While the present teachings have been described above in terms of specific embodiments, it is to be understood that they are not limited to these disclosed embodiments. Many modifications and other embodiments will come to mind to those skilled in the art to which this pertains, and which are intended to be and are covered by both this disclosure and the appended claims. It is intended that the scope of the present teachings should be determined by proper interpretation and construction of the appended claims and their legal equivalents, as understood by those of skill in the art relying upon the disclosure in this specification and the attached drawings.

## Claims

1. A slip ring, comprising:
a stator;
a rotor configured to rotate relative to the stator about a rotation axis, the rotor having a first wireless module with a first antenna;
the stator having a second wireless module with a second antenna;
the first and second antennae arranged along the rotation axis;
the first and second antennae adapted to communicate with each other by at least partially using polarized signals.

2. The slip ring of claim 1, wherein:
the first antenna is mounted on an end of the rotor that is disposed in the stator during operation;
the second antenna is mounted on the stator such that the first and second antennae face each other during rotation of the rotor.

3. The slip ring of claim 2, wherein the first and second antenna have generally helical-shaped elements to polarize their respective signals, wherein the first and second antennae are preferably arranged for a circular polarization.

4. The slip ring of claim 1, wherein the first and second antennae each include two antenna elements, one of which is used for transmission and the other for reception.

5. The slip ring of claim 4, wherein the first and second antennae transmit and receive signals bi-directionally by polarization, frequency modulation, and/or amplitude modulation.

6. The slip ring of claim 1, wherein the first and second wireless modules each include a 60 GHz chipset that performs at least some signal conditioning.

7. The slip ring of claim 1, wherein the first and second antennae are configured to communicate with each other according to Wi-Fi, ZigBee, Bluetooth, wireless HDMI, USB, or IEEE 802.11 standard.

8. The slip ring of claim 1, further comprising a light module disposed in each of the rotor and stator, and optical fibers extending to each of the first and second antennae such that communication is facilitated between the rotor and the stator using light signals.

9. The slip ring of claim 1, wherein the first and second antenna extend parallel to one another and the rotation axis or wherein the first and second antenna extend at an angle relative to one another and are angularly disposed relative to the rotation axis.

10. The slip ring of claim 1, further comprising a shield that at least partially contains signals exchanged by the first and second antennae within the slip ring.

11. The slip ring of claim 1, wherein the first and second antennae communicate with each other using one or more Ethernet channels, wherein the one or more Ethernet channels are preferably time divided to create multiple data channels.

12. A communication system for a slip ring, comprising:
a first wireless module with a first antenna, the first wireless module adapted to be mounted on a rotor that rotates relative to a stator about a rotation axis;
a second wireless module with a second antenna, the second wireless module adapted to be mounted on the stator;
the first and second antennae adapted to communicate with each other by at least partially using polarized signals.

13. A rotary joint, comprising:
the communication system of claim 12;
a rotor having the first wireless module;
a stator having the second wireless module;
the first and second antennae arranged along the rotation axis and facing each other.

14. The rotary joint of claim 13, wherein:
the first antenna is mounted on an end of the rotor that is disposed in the stator during operation;
the first and second antenna have generally helical-shaped elements that polarize their respective signals.

15. The rotary joint of claim 14, wherein:
the first and second wireless modules each include a 60 GHz chipset that performs at least some signal conditioning;
the first and second antennae are configured to communicate with each other according to Wi-Fi, ZigBee, Bluetooth, wireless HDMI, USB, or IEEE 802.11 standard.

16. A method for communicating signals through a slip ring, comprising:
providing a stator;
providing a rotor configured to rotate relative to the stator about a rotation axis, the rotor having a first wireless module with a first antenna;
the stator having a second wireless module with a second antenna;
the first and second antennae arranged along the rotation axis;
transmitting and receiving a polarized radio frequency (RF) signal through the first and second antennae.

17. The method of claim 16, wherein:
the first antenna is mounted on an end of the rotor that is disposed in the stator during operation;
the second antenna is mounted on the stator such that the first and second antennae face each other during rotation of the rotor;
the first and second antenna have generally helical-shaped elements to polarize their respective signals.
